# EUROPEAN PATENT APPLICATION

(11) **EP 2 653 846 A1**
(43) Date of publication of application: **23.10.2013**
(21) Application number: 12164641.8
(22) Date of filing: 18.04.2012
(51) Int. Cl.: G01L 9/12, G01P 15/125, G01R 17/08, G01R 27/26

(54) **Sensor circuit and a method of calibration**

(71) Applicant: NXP B.V., 5656 AG Eindhoven (NL)
(72) Inventor: Van Veldhoven, Robert, Redhill, Surrey RH1 1NY (GB); Ersoy, Selcuk, Redhill, Surrey RH1 1NY (GB); Sebastiano, Fabio, Redhill, Surrey RH1 1NY (GB); Reimann, Klaus, Redhill, Surrey RH1 1NY (GB)
(74) Representative: Williamson, Paul Lewis

(57) **Abstract**

A sensor circuit uses two AC signal sources for generating out of phase bias signals. A sensor having an impedance which is sensitive to a physical property to be sensed is coupled between one of the signal sources and a first input to an amplifier. An impedance element coupled between the other of signal sources and the same input to the amplifier enables the AC signal component to be cancelled so that only the desired sensor signal is amplified. The impedance element is substantially matched to a sensor impedance value.

## Description

This invention relates to a sensor circuit, for generating an output signal from a sensor which has an impedance which varies in response to a parameter being sensed.

A sensor generates a signal in response to a parameter being sensed. This parameter can for example manifest itself as a change in capacitance, current or resistance. This change in property then needs to be processed in such a manner than an output signal, for example a voltage, is derived.

In sensor interfacing, DC biasing is frequently used to obtain an output signal from a sensor.

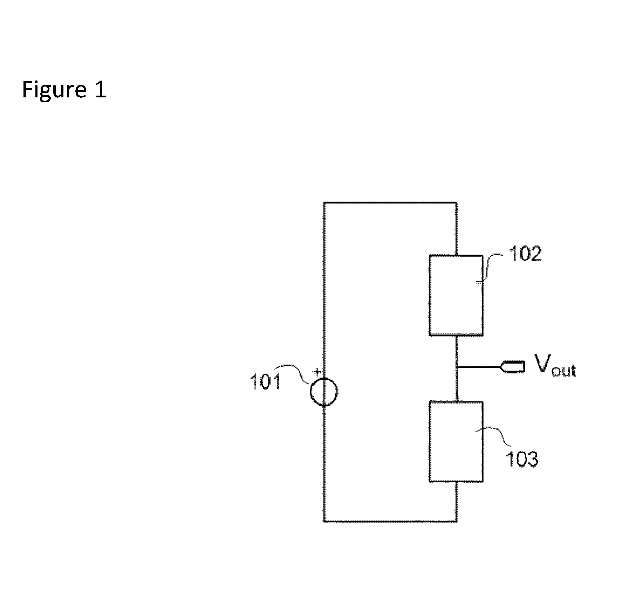

A typical example circuit is shown in Figure 1. A sensor 103 is biased via an additional component 102, which supplies a current to the sensor, via a DC voltage source 101. The additional component can be, for example, a resistor, a current source, or any other component that can supply a current to the sensor.

The circuit elements 102 and 103 can both be implemented as sensors to form a "half bridge" circuit. An additional half bridge circuit can also be used to form a full bridge to increase sensitivity (not shown).

Variations in an external physical parameter (e.g. pressure, temperature, humidity) applied to the sensor cause changes in at least one of the sensor electrical parameter (e.g. resistance, current or capacitance), thus transforming the applied DC into an output signal. This way of biasing has several disadvantages.

This will be explained in connection with a capacitive sensor. For example, one particular implementation of Figure 1 can be based on a capacitive microphone. The biasing of the capacitive microphone is normally carried out with a resistor (R_{bias}) with extremely high value as the bias component 102, which is used to charge the capacitive microphone, which forms the sensing element 103.

Once charged, the charge on the microphone can be assumed constant, as the filter formed by the biasing resistor (R_{bias}) and the microphone capacitance (C_{mic}) cuts off frequencies well below the signal band of interest (in this case the 7audio band). Therefore, if the microphone capacitance changes due to the sound pressure, the output voltage will change accordingly.

The signal to noise ratio (SNR) at the output of the microphone is determined by the cut-off of R_{bias} and C_{mic}, as the capacitor C_{mic} filters the noise of R_{bias}. In the case of microphones with small nominal capacitance (like MEMS microphones), the resistor required to bias the microphone should be very large to reduce the in-band noise. For microphones in the pF range, this leads to resistor values beyond the GΩ range to achieve a SNR around 60dB, which is required in current applications.

Such large resistor values are very impractical to implement in IC technology. To implement GΩ resistors, two anti-parallel diodes are frequently used: they provide a path to charge the microphone and show a large dynamic resistance when no bias current is flowing through them. However, the microphone is often in a separate die that needs to be connected to the ASIC containing the anti-parallel diodes. Therefore, electrostatic discharge (ESD) leakage can become problematic, as small leakage currents might reduce the diode equivalent impedance, increasing the in-band noise.

A high impedance node is formed by C_{mic} and R_{bias}, which will be susceptible to electromagnetic interference. Because of its high impedance, it easily picks up line frequencies (50Hz or 60Hz). This is normally counteracted by using a Faraday cage (metal encapsulation), which is an expensive solution.

The DC microphone biasing method is also prone to parasitics, as all capacitors loading the output of the microphone will reduce its sensitivity.

The audio signal is close to DC, which means that 1/f noise of the succeeding signal processing circuit can become a problem. In CMOS technology, the 1 /f noise of MOS transistors is inversely proportional to transistor area. Therefore, to achieve a sufficiently low 1/f noise, impractical transistors sizes would be required. As large transistors in the input stage of the cascaded circuits lead to additional parasitics to the microphone, they will also desensitize the microphone system.

Because of the high ohmic microphone output node, it is very difficult to use chopping or auto-zeroing to reduce the 1/f noise of the input stage, as both techniques will inject a parasitic switching current during the chopping or auto zeroing phase of the circuit. In case they are employed, this might open up the diodes forming the high ohmic resistor.

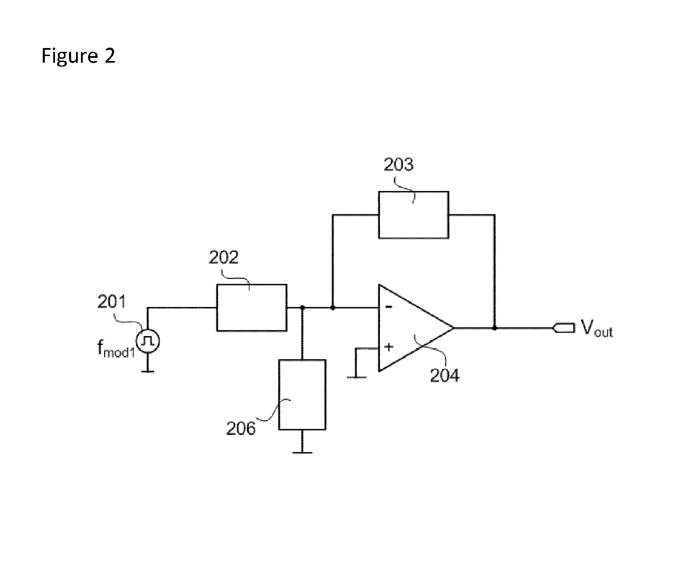

Figure 2 shows an approach using a different sensor bias technique.

The circuit uses an amplifier 204 to form a virtual ground node at its inverting input terminal. On one side, the sensor device 202 is connected to the virtual ground node. On the other side the sensor 202 is connected to a signal source 201. The signal source 201 generates a signal for instance with frequency f_{mod1}, which is transformed into a current by the sensor 202 and the virtual ground node. The sensor impedance, and therefore the current flowing through sensor 202, is modulated by the physical parameter measured by the sensor, as the physical quantity changes the electrical properties of the sensor.

The amplifier output signal level is determined by the feedback impedance 203 across the amplifier. The output Vout is the signal from the source 201 AM-modulated by the sensed parameter.

One of the advantages is that if the modulation frequency f_{mod1} is chosen properly, the microphone input signal is modulated beyond the corner between 1/f noise and thermal noise of the amplifier, and very large transistors in the amplifier are no longer required.

An additional impedance 206 can be used to set the input common-mode at the negative input, if required. This impedance might also be implemented as a switched capacitor circuit.

The sensor 202 and feedback impedance 203 can be resistive (including switched-capacitor resistance), capacitive or inductive, or a combination of them. Amplifier 204 can be an OpAmp, an OTA, or any other type of amplifier.

The carrier signal f_{mod1} from the signal source 201 might be a sine wave, a square wave, a pseudo random wave or any other type of wave. In the most optimum case all frequency components of the carrier signal should be beyond the 1/f noise corner of the amplifier. Note that the signal source 201 can also be implemented using a charge pump and associated switches.

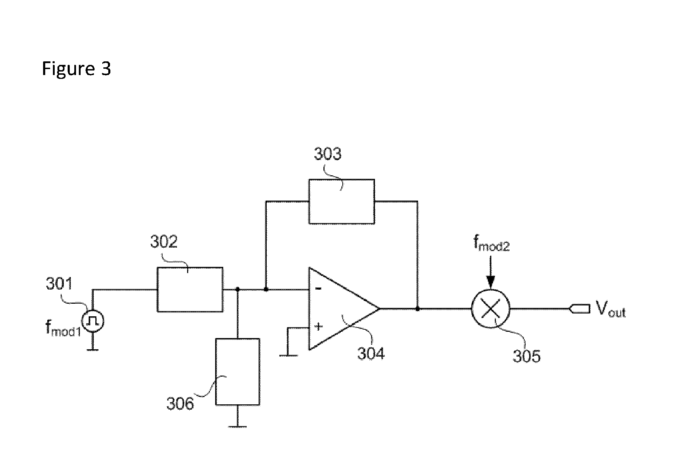

Figure 3 shows the circuit of Figure 2 (301,302,303,304,306 corresponding to components 201,202,203,204,206), with the addition of a mixer 305 at the output of the amplifier. The mixer can be for instance implemented with MOS switches, or a switched capacitor / sampling circuit. With the mixer, the output signal of the amplifier can be (synchronously) modulated back to an arbitrary frequency fₒᵤₜ=|f_{mod2}- f_{mod1}|. If f_{modl}=f_{mod2}, the signal will be demodulated around DC.

The carrier signal f_{mod1} from the signal source 301 and the mixer signal f_{mod2} at 305 might be a sine wave, a square wave, a pseudo random wave or any other type of wave.

The frequency f_{mod1} of the signal source 301 and the mixing frequency f_{mod2} at the mixer 305, do not necessarily need to be of the same frequency.

Furthermore, the DC level on the bottom of 301,306 and at the positive input of amplifier 304 can be chosen arbitrarily.

The amplitude of the f_{mod1} signal should be chosen as high as possible for best sensitivity. However, it should not endanger the operation of the sensor. For example, an AC signal on a MEMS capacitive sensor leads to a DC component in the electrostatic force, which can eventually lead to collapse of the movable membrane, which is in many cases not the indented operation point. The AC voltage should for a microphone not exceed the collapse bias voltage. The highest AC signal can be applied to the sensor if the average DC bias level of the sensor is OV. In some cases it might be needed to apply a DC bias to the sensor.

One disadvantage of the circuit described in Figures 2 and 3 is the fact that part of the voltage headroom at the output of the amplifier will be used by the carrier signal, as it is also amplified by the ratio of sensor impedance and feedback impedance. If the sensor element 302 has an impedance Z=Z₀+Zₓ, where Z₀ is constant and Zₓ is signal dependent, the signal current through the sensing element is Vₘ/Zₓ and the carrier current is Vₘ/Z₀ , where |vₘ| is the voltage produced by the source 301. As the sensor deviation frequently is small compared to its nominal value (eg. ΔC_{mic}/C_{mic,nom} for a capacitive microphone), the carrier can be much larger than the modulated signal of interest.

According to the invention, there is provided a method and apparatus as defined in the independent claims.

In one aspect, the invention provides a sensor circuit comprising:
a first AC signal source for generating a first bias signal;
a second AC signal source for generating a second bias signal with opposite phase to the first bias signal;
an amplifier having first and second inputs;
a sensor having an impedance which is sensitive to a physical property to be sensed, coupled between one of the first and second signal sources and the first input to the amplifier;
an impedance element coupled between the other of the first and second signal sources and the first input to the amplifier, wherein the impedance element is substantially matched to a sensor impedance value.

This circuit supplies an AC current to the sensor, and drives an equal and opposite current (based on a nominal sensor impedance value) through an impedance element connected to the same amplifier input. This means the carrier current signal is cancelled and is thus not amplified. Instead, only the sensor signal, rather than the carrier signal on which it is modulated, is amplified. The chain of the sensor and impedance element, and the amplifier thus has a bandpass filter characteristic. The sensor impedance value to which the impedance element is matched is a static impedance value. It can be based on a nominal operating point of the sensor, but it can deviate from this but still provide suppression of the AC component.

The second input to the amplifier can be connected to ground, such that the first input comprises a virtual ground. The amplifier can comprise an opamp.

The first input preferably comprises the inverting input of the amplifier and the circuit comprises a feedback impedance from the output to the inverting input of the amplifier. This provides an amplifier with a controlled gain by means of a negative feedback path.

The amplifier can comprise a differential amplifier with an inverting and a non-inverting input and a pair of differential outputs, wherein a second impedance element is coupled between the one of the first and second signal sources and the second input to the amplifier and a third impedance element is coupled between the other of the first and second signal sources and the second input to the amplifier.

This arrangement provides a fully differential setup, with a pair of impedances coupled to each amplifier input. There are preferably then also two feedback paths.

The feedback impedance(s) can comprise a capacitor or a capacitor in parallel with a resistor.

The circuit may have one sensor only or it may have multiple sensors- with the additional sensors taking the place of the impedance elements. The impedance element (or one or more of the impedance elements if there are more than one), is preferably adjustable, and the circuit then further comprises a calibration system for impedance element adjustment to provide the desired matching, which in turn suppresses amplification of the AC component.

A switching arrangement can be provided between the sensor and impedance element or elements and the amplifier. This enables different calibration approaches to be adopted by enabling different impedance elements to be matched to each other during a calibration routine.

A MEMS microphone circuit can use the sensor circuit of the invention, with the MEMS microphone forming the sensor of the sensor circuit.

In another aspect, the invention provides a method of calibrating a sensor circuit which comprises a first AC signal source for generating a first bias signal, a second AC signal source for generating a second bias signal with opposite phase to the first bias signal, an amplifier having first and second inputs, a sensor having an impedance which is sensitive to a physical property to be sensed, coupled between one of the first and second signal sources and the first input to the amplifier, and an adjustable impedance element coupled between the other of the first and second signal sources and the first input to the amplifier,
wherein the method comprises substantially matching the impedance of the adjustable impedance element to a sensor impedance value.

The method can comprise filtering the amplifier output to derive a signal component corresponding to the frequency of the first and second bias signals, and deriving control of the adjustable impedance element to minimise the signal component.

Examples of the invention will now be described in detail with reference to the accompanying drawings, in which:
Figure 1 shows a first known sensor circuit;
Figure 2 shows a second known sensor circuit;
Figure 3 shows a third known sensor circuit;
Figure 4 shows a first example of (single ended) sensor circuit of the invention in schematic form;
Figure 5 shows a second example of (differential) sensor circuit of the invention in schematic form;
Figure 6 shows a first implementation of sensor circuit of the type shown schematically in Figure 5;
Figure 7 shows a second implementation of sensor circuit of the type shown schematically in Figure 5;
Figure 8 shows a third implementation of sensor circuit of the type shown schematically in Figure 5;
Figure 9 shows the addition of a calibration system to the circuit of the type shown schematically in Figure 4;
Figure 10 shows a first implementation of sensor circuit of the type shown schematically in Figure 9;
Figure 11 shows the addition of a calibration system to the circuit of the type shown schematically in Figure 5;
Figure 12 show a modification to the circuit of Figure 11;
Figure 13 shows a first implementation of sensor circuit of the type shown schematically in Figure 11.

The invention provides a sensor circuit in which two AC signal sources are used for generating out of phase bias signals. A sensor having an impedance which is sensitive to a physical property to be sensed, is coupled between one of the signal sources and a first input to an amplifier. An impedance element coupled between the other of signal sources and the same input to the amplifier enables the AC signal component to be cancelled so that only the desired sensor signal is amplified. The impedance element is substantially matched to a sensor impedance value.

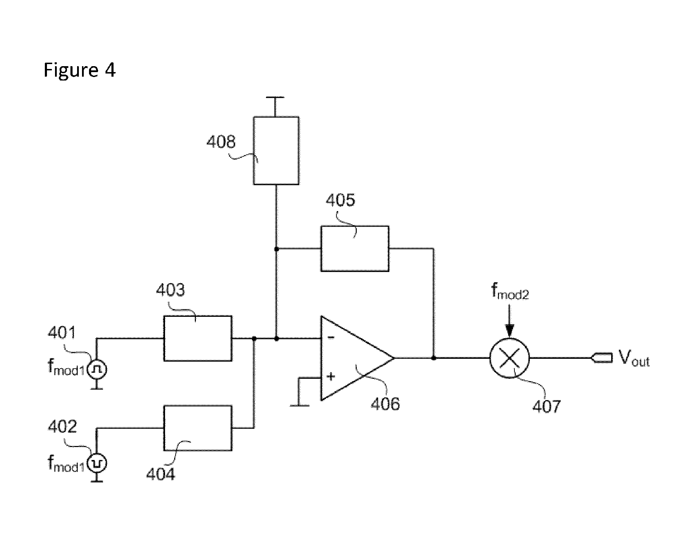

Figure 4 shows a first example of sensor circuit of the invention.

The circuit operates in a similar manner to the circuit of Figure 3, in that a modulated signal 401 is applied to one side of a sensor 403, and the other side is connected to the inverting input of an amplifier 406. The non-inverting input is grounded so that the inverting input functions as a virtual ground. The amplifier 406 has a feedback impedance 405, and a mixer 407 is provided at the output.

The impedance 408 coupled between the inverting input and a high voltage rail can be used to set the common mode of the amplifier, although the impedance 408 or the feedback impedance 405 can be used. If all other impedances are capacitive, the impedance 408 can be resistive to provide a DC bias.

To reduce the voltage headroom required for the carrier component, and to optimize the amplification factor of the modulated signal of interest, a sensor impedance clone 404 is connected to the virtual ground node.

At the modulation frequency, the impedance of the clone 404 should be as close as possible to the nominal impedance of the sensor 403.

The other side of the clone impedance 404 is connected to signal 402, which generates an equal amplitude but anti-phase signal compared to the sensor modulated signal 401. As the amplitudes of signal sources 401,402 are the same, and the impedance of 404 is as close as possible to the nominal impedance of 403, but the signal sources 401/402 are in anti-phase, the carrier currents through 403 and 404 are in anti-phase and the carrier current through the feedback impedance 405 is cancelled.

Therefore, the feedback impedance 405 can be chosen to be much higher, and the voltage headroom at the amplifier output can be fully used for the modulated signal.

The ratio of signal source voltages and impedances 403,404 can be chosen freely, preferably within the optimal solution space where the anti-phase currents through 403 and 404 are equal but of inverse sign. Due to process tolerances, the impedances of 403,404 (sensor and equivalent nominal impedance) might need tuning, such that the clock carrier cancellation is optimum.

The equivalent clone impedance 404, the additional impedance 408, and the feedback impedance 405 can be resistive, capacitive, inductive, or if appropriate their switched-capacitor equivalent.

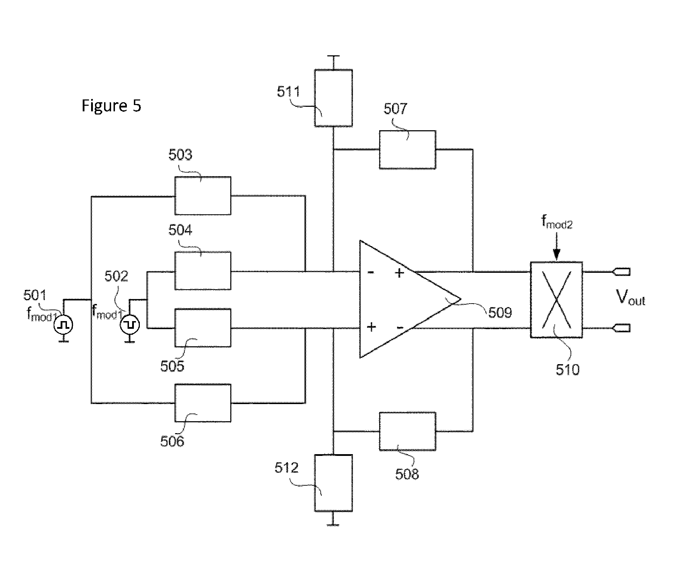

Figure 5 shows a second example using a differential amplifier 509. A first feedback impedance 507 is from the non-inverted output of the amplifier to the negative input (the same as the single feedback path in Figure 4) and a second feedback impedance 508 is from the inverted output of the amplifier to the positive input.

Each signal source 501,502 connects to both amplifier inputs through a respective impedance. One signal source connects through two impedances to the two amplifier terminals, and the other inverse signal source connects to the two amplifier terminals through two other impedances. There can be only one sensor and the other impedances are all clone impedances, or there may be multiple sensors, as discussed further below. In one example, there is a single sensor 503 and the other impedances are clone impedances.

A differential mixer is shown as 510.

The impedances 511 and 512 between the amplifier inputs and voltage rails can be used to set the input common mode of the amplifier.

This forms a completely differential implementation, with the additional advantage compared to Figure 4 that any noise/disturbance coming from the clock supply is common-mode due to the fully differential structure.

The common-mode disturbance/noise can be cancelled by a differential to single ended conversion (not shown).

The structure in Figure 5, like the circuit of Figure 4, also cancels the carrier by proper designing of the impedances. Due to process tolerances, the impedances of the sensors and clone impedances 503,504,505,506 (sensors and equivalent nominal impedances) might need tuning, such that the carrier noise immunity and carrier cancellation is optimum.

The impedances 511 or 512 can also be tuned for optimal matching between the inputs, e.g., to account for parasitic package capacitances of the sensor. This could enhance suppression of common-mode signals generated by the amplifier, e.g., supply noise or current source noise.

Any of the impedances 503, 504, 505 and 506 in Figures 4 and 5 can be replaced by a sensor, if appropriate. For instance, if 503 is a sensor, 505 can be implemented with a sensor in order to double the sensitivity of the sensor system and to perfectly cancel the carrier currents through 503 and 505. If sensors with negative sensitivity are available, those could also be used to replace impedance 504 or 506 or both.

The equivalent impedances (which can be any of 503,504,505,506), the additional impedances 511,512, and the feedback impedances 507,508, can be resistive, capacitive, inductive, or if appropriate their switched-capacitor equivalent, or any combination of these.

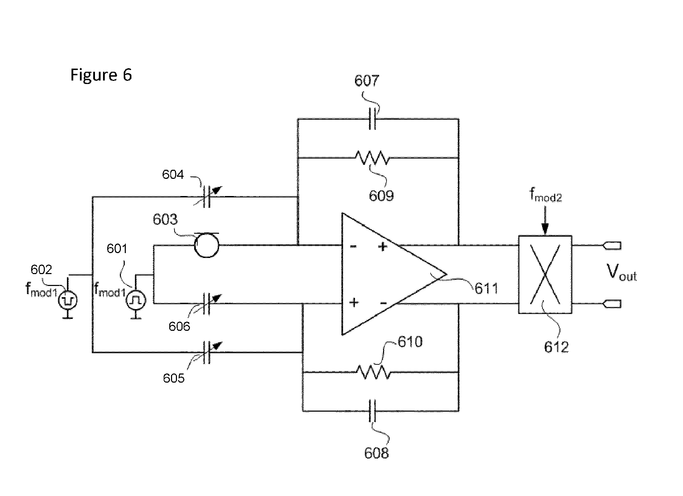

Figure 6 shows an embodiment of the circuit of Figure 5. In this case the sensor is a capacitive microphone 603. The other impedances on the input side of the amplifier 611 are implemented with capacitors 604,605,606, to match the capacitive sensor, and therefore cancel the carrier at the output of the amplifier 611. The two signal sources are shown as 601,602.

Due to the differential nature of the circuit, noise on the carrier supply is converted into common-mode noise. The two feedback impedances are each implemented as a parallel resistors 609,610 and capacitor 607,608. The feedback resistors set the input common-mode of the amplifier 611. These perform the function of the impedances 511,512 which connect to the power lines in the example of Figure 5. The feedback capacitors set the gain of the signal component.

At the output of the amplifier 611, a mixer 612 is present, which for instance can be implemented with MOS transistor switches, or a switched capacitor / sampling circuit.

The arrangement of the impedances 603,604,605,606 can be multiple combinations of sensors and compensating nominal equivalents. Also more impedances (sensors or nominal equivalents) can be connected to the input of the amplifier, if appropriate. For example, to increase sensitivity of the system, more microphones (and their appropriate equivalents) can be connected to the amplifier.

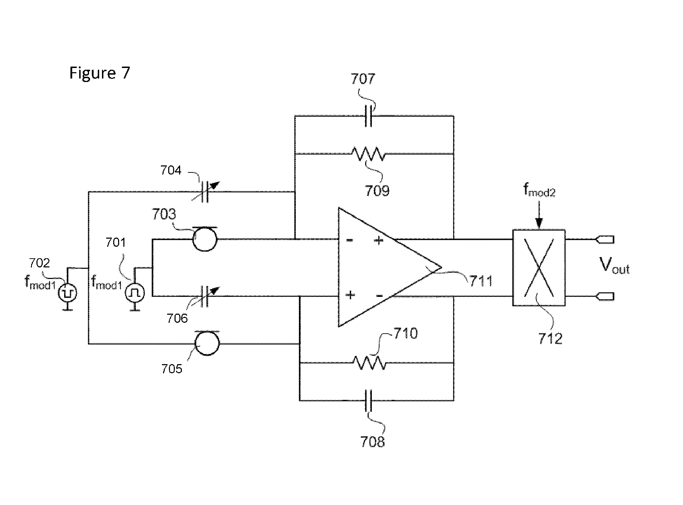

Figure 7 shows a modification to Figure 6 in which a microphone is associated with each signal source 701,702 and thus a microphone is coupled to both inputs of the differential amplifier 711. The additional microphone 706 increases the sensitivity.

The sensitivity can be further improved by additionally using microphones with sensitivity of opposite sign compared to microphones 703,706 as a replacement for impedances 704,705. In this case, assuming that the microphones have reasonable matching, no further means have to be taken to cancel the carrier.

The circuit can also be used with any type of sensor, for example a sensor with segmented electrodes or a sensor with multiple membranes. The circuit of Fig. 7 can also be used to implement directional microphones if separate microphone membranes are used.

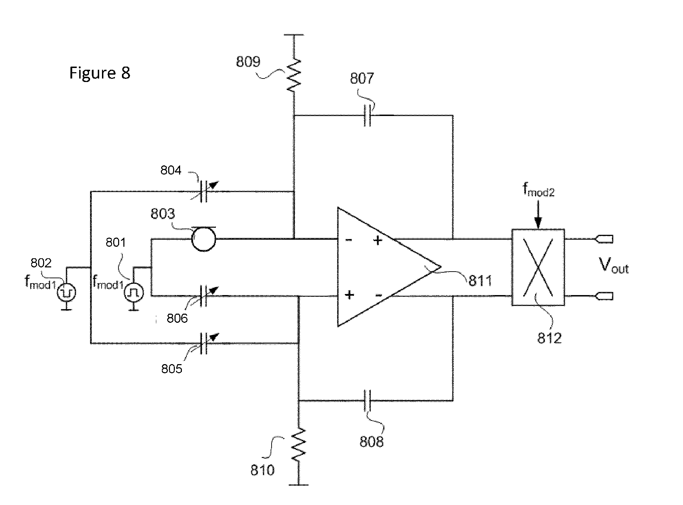

Figure 8 shows a different modification to Figure 6 to implement a slightly different way of setting the input common-mode.

The impedances 511 512 of Figure 5 (which connect to the power lines) for setting the input common-mode of amplifier are implemented as resistors 809,810. Thus, the feedback resistors 609,610 of Figure 6 are removed and the feedback impedances are implemented as capacitors 807,808. In this way, the input and output common-mode can be chosen independently.

The absolute value of the common mode voltage is often determined by the voltage headroom for the stacked transistors. Mainly, the circuit is optimized to improve Total Harmonic Distortion (THD).

To avoid saturation of the amplifier, automatic gain can be used. The feedback impedances can either be made non-linear, e.g., by using a semiconductor device or switched capacitor circuitry, or they can be made programmable, to implement multiple gain settings, which can be controlled by an automatic gain control loop. Alternatively the sensor signal can be diminished by adding series impedances to the measurement bridge at the input of the amplifier.

As outlined above, to cancel the carrier signal f_{mod1} at the output of the amplifier, the equivalent impedance(s) which mimic the microphone impedance should be calibrated to the microphone's nominal impedance, such that the carrier amplitude at the output of the amplifier is reduced to a negligible level. This can be implemented as a calibration procedure.

For the first example circuit of Figure 4, a simple but effective way of cancelling the carrier at the output of amplifier 406 will be described.

First, either the carrier amplitude at the output of the amplifier is reduced by reducing the amplitudes of the signal sources 401,402, or by reducing the gain of the amplifier by adapting the feedback component 405. In this way, the carrier will not overdrive the amplifier 406. This amplitude limiting step is not needed if the output of the amplifier is only used to determine if the calibration procedure needs to count up or down, to converge to the right value in a number of steps (i.e. an essentially digital calibration procedure).

If it is assumed that impedance 403 is a sensor with a DC component which is not of interest, such as a microphone, the clone impedance 404 can be tuned to the appropriate value by measuring the carrier residue at the output of the amplifier 406.

The gain of the amplifier can then be increased by adapting feedback component 405 such that the output range of the amplifier can fully be used by the audio signal coming from the microphone. The carrier detection can also use the output of the mixer 407.

The carrier residue is then the signal around DC. Even with an applied audio signal the circuit can tune itself to suppress the carrier "on the fly".

A similar approach can be used for the differential structure of Figure 6. To cancel the carrier f_{mod1} at the output of the amplifier 611, the equivalent impedances 604, 605, 606 which mimic the impedance of the microphone 603 should be calibrated to the microphone's nominal impedance, such that the carrier amplitude at the output of the amplifier is reduced to a negligible level. Due to mismatch in the nominal capacitor values of 603,604,605,606, the carrier signal at the output of the amplifier 611 can have a common-mode and a differential mode contribution. Therefore, a calibration algorithm is desired that is able to determine which capacitor needs to be tuned to reduce both the common mode as well as the differential mode carrier contribution at the output of the amplifier.

A simple but effective way of cancelling the carrier at the output of amplifier 611 will be described.

First, either the carrier residue at the output of the amplifier is reduced by reducing the amplitudes of the signal sources 601,602, or by reducing the gain of the amplifier by adapting feedback components 607,608,609,610 if appropriate.

Again, this means the carrier will not overdrive the amplifier 611.

Second, if it is assumed that 603 is a microphone, the clone impedances 604,605,606 can be tuned to the appropriate value, by measuring the carrier residue at the output of the amplifier 611.

Third, the gain of the amplifier can be increased by adapting feedback components such that the output range of the amplifier can fully be used by the audio signal coming from the microphone.

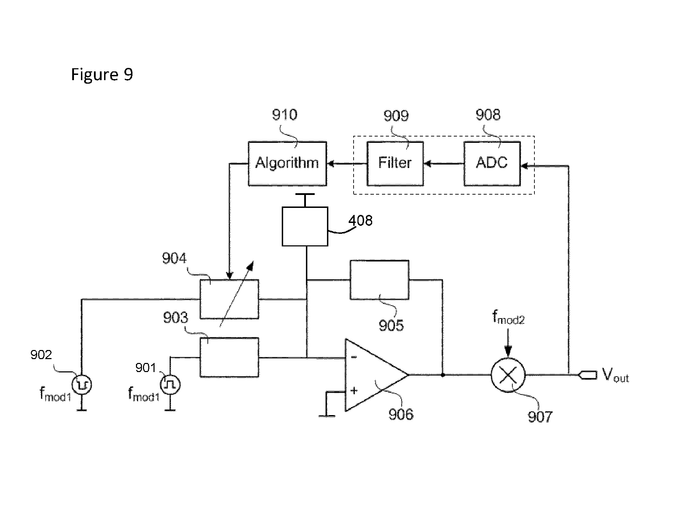

A more conceptual explanation of the possible calibration procedures is made with reference to Figure 9 which shows calibration components applied to the single ended circuit Figure 4. Components 901,902,903,904,905,906,907 in Figure 9 correspond to components 401,402,403,404,405,406,407 in Figure 4.

Figure 9 shows a tuning system applied to the clone impedance 904, which is shown as a variable impedance. The tuning system comprises a carrier residue measurement block having an A/D converter 908 and a filter 909 which receives the output signal and provides feedback control of the tunable impedance 904.

An algorithm 910 is used to determine the required impedance control.

The carrier residue measurement can be done at either the modulation frequency f_{mod1}, or at any other frequency that is convenient (e.g. f_{mod1}-f_{mod2}) and appropriate. If f_{mod1}=f_{mod2}, the measurement block measures a DC value which is representative for the carrier residue.

Based on the size of the carrier residue, the algorithm decides if the tuneable impedance 904 needs to be changed and in which direction. The algorithm applies the right input signal to the tuneable element to cancel the carrier residue at the output of the amplifier 906.

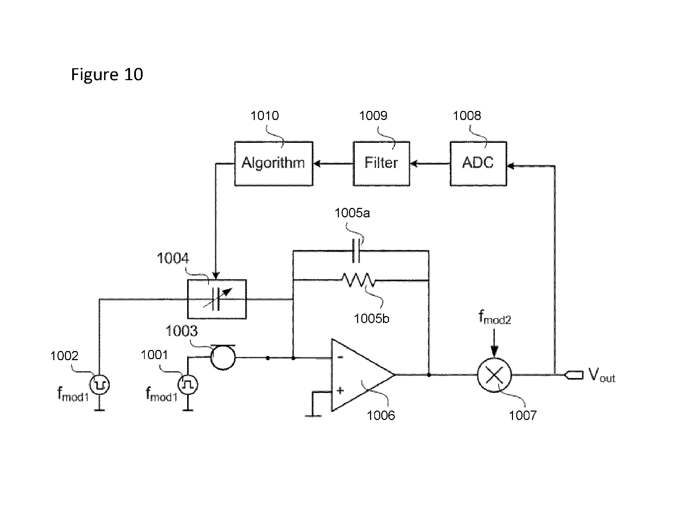

An example implementation of the circuit of Figure 9 is shown in Figure 10. The components 1001,1002,1003,1004,1006,1007,1008,1009,1010 correspond to the components 901,902,903,904,906,907,908,909,910 of Figure 9. The feedback impedance 905 is implemented as a capacitor 1005a and resistor 1005b in parallel. The sensor 903 is implemented as a microphone 1003 and the variable impedance 904 is implemented as a variable capacitor 1004.

The capacitor 1004 can be tuned either digitally using an ADC and a capacitor DAC, or in the analog domain using a measurement amplifier and a varicap.

The single ended circuit of Figure 10 uses the modulation source 1001 to drive the microphone, and the other terminal of the microhone is connected to the virtual ground node formed by the amplifier 1006, resistor 1005b, and capacitor 1005a. It also uses the carrier cancellation described earlier, by using source 1002 and equivalent nominal impedance 1004. If there is mismatch between the nominal equivalent capacitance value of 1004 and the nominal capacitance of the microphone 1003, a residue carrier will be found at the amplifier output.

As described above, the wanted signal is also modulated to f_{mod1}, and can be found amplified at the amplifier output. The mixer 1007 which (de)modulates with f_{mod2} mixes the signal (and carrier) to an arbitrary frequency f_{mod1}-f_{mod2}. To improve the amplifier's voltage headroom for the wanted signal, the carrier can be reduced as much as possible. Therefore, the output signal of the mixer is fed to an ADC. The ADC 1008 converts the mixer output signal at frequency f_{mod1}-f_{mod2} to the digital domain, where it is filtered by the digital filter 1009.

The output of the filter is connected to the algorithm block 1010 (for example a state machine), which determines which of the nominal equivalent capacitor elements in the capacitor DAC 1004 have to be set to cancel the carrier. This way the total capacitor value of the DAC is tuned to the nominal capacitor value of the microphone, and the carrier is cancelled.

Note that f_{mod2} can also be 0Hz or f_{mod1}.

A similar calibration method can be applied to the differential structures described above. These differential circuits are used to increase common-mode and power supply rejection.

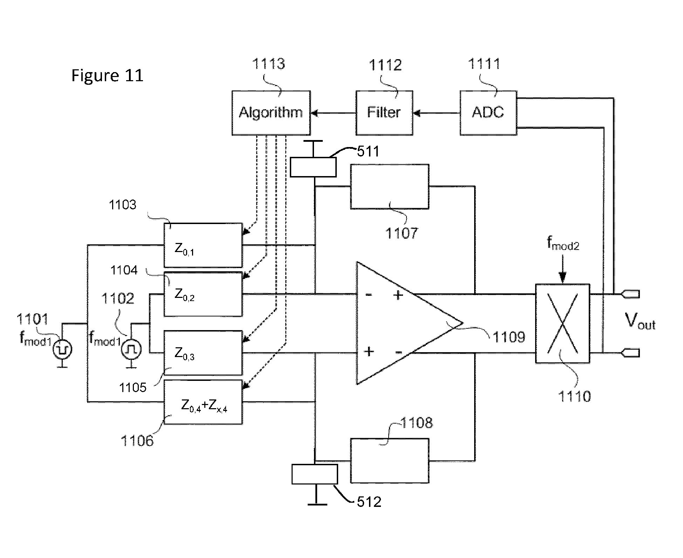

Figure 11 shows how the calibration approach of Figure 9 can be applied to the differential circuit of Figure 7. The components 1101-1110 correspond to the components 501-510 of Figure 5 (although the sensor in this example is connected to the non-inventing input). The tuning system again comprises ADC 1111, filter 1112 and control block (algorithm) 1113.

Again, the sum of all carrier parts should cancel each other at the output of the amplifier 1109, by tuning the nominal equivalent impedances. The tuning algorithm described below requires measurement of the differential and common-mode carrier residue. For this purpose, the common-mode voltage expected at the amplifier output is used as a reference for the common-mode residue measurement.

In this case, the sensor is connected to the non-inverting input, is shown as 1106 and is a microphone, and the positive and negative phase carrier have equal amplitude. The calibration procedure can be done as follows:

Assuming impedance 1103 is Z_{0,1}, impedance 1104 is Z_{0,2}, impedance 1105 is Z_{0,3}, impedance 1106 is Z_{0,4}+Z_{x,4}, where Z₀ is the nominal equivalent impedance, and Zₓ is the impedance change due to the physical quantity (so that in this case impedance 1106 is the sensor). The calibration comprises:
- Measure the common mode signal: V_{CM}∝ (Y_{0,1}- Y_{0,2}+Y_{0,3}-Y_{0,4}-Y_{x,4}).
- Measure the differential mode signal: V_{DM}∝ (Y_{0,1}-Y_{0,2}-Y_{0,3}+Y_{0,4}+Y_{x,4}).
- Calculate V_{DM}-V_{CM} ∝ (2Y_{0,3}-2Y_{0,4}-2Y_{x,4}).

From the sign of the calculated value it can be determined if Z_{0,3} has to be increased or decreased. Z_{0,4} which represents the microphone cannot be changed. An additional impedance can be switched in parallel with the sensor, but most likely it will reduce the sensitivity of the system.
- Measure V_{DM}+V_{CM} ∝ Y_{0,1}-Y_{0,2}. From the sign of this calculation it can be determined how to scale the values of Z_{0,1} and/or Z_{0,2}.

After this calibration procedure, Z_{0,3}=Z_{0,4}+Z_{x,4} and Z_{0,1}=Z_{0,2}, and the carrier amplitude at the output of the amplifier 1109 is zero.

The calibration is susceptible to the physical parameter the sensor is measuring. This can be avoided by removing the physical excitation of the sensor, although this may not be possible when the system is already is in use. It is possible however, in an initial calibration after assembly of the complete system.

The automatic or manual calibration system can therefore also be used during final testing of the sensor assembly as a one-time calibration. Another approach is to use a narrow band filter filtering out the signal part caused by Zₓ in Z₀. This approach assumes a low frequency limit, below which it is assumed that there is no physical signal component.

In the calibration procedure described above it is not defined how the absolute level of Z_{0,3} and Z_{0,4} compares with the absolute level of Z_{0,1} and Z_{0,2}. If the absolute of Z_{0,3} and Z_{0,4} is different from Z_{0,1} and Z_{0,2}, the noise on the clock supply is not cancelled (fully) at the output of the amplifier.

To improve the rejection of clock supply noise, two additional measures can be taken:
- Z_{0,3} can be interchanged by either Z_{0,1} or Z_{0,2}. Part of the calibration routine described above needs to be repeated, to make Z_{0,1} (or Z_{0,2}) equal to Z_{0,4}, and Z_{0,2} (or Z_{0,1}) equal to Z_{0,3}. In this way, all nominal equivalent impedances can be made equal, and noise on the clock supply is fully cancelled at the differential output of the amplifier 1109.

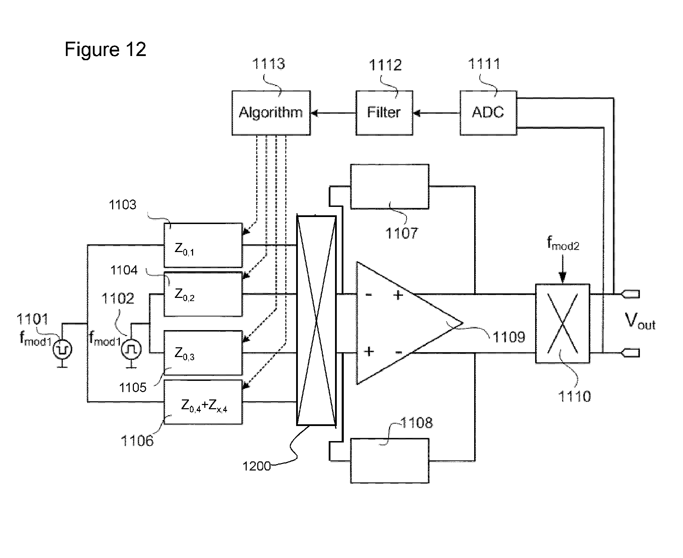

To interchange impedances, additional switches can be used in front of the amplifier. This modification to the circuit of Figure 11 is shown in Figure 12 which shows an additional switching block 1200.

Another approach is to deliberately put an additional signal on the clock supply, which will be visible at the output, if the impedances of Z_{0,1} to Z_{0,4} do not match. The same procedure as described above can be used to make Z_{0,1} equal to Z_{0,2} and to make Z_{0,3} equal to Z_{0,1}, looking at the carrier amplitude in a differential and common way as described. Next, the additional signal is switched on, with the same phase for Z_{0,1} to Z_{0,4}. As the signal is common mode on all the input signals, it should be cancelled at the output of the amplifier 1109.

If Z_{0,1} and Z_{0,2} are not equal to Z_{0,3} and Z_{0,4}, the value of Z_{0,1} and Z_{0,2} both have to be increased or decreased, assuming that Z_{0,4} represents the microphone and Z_{0,3}= Z_{0,4}. If it is assumed that the increase in Z_{0,1} and Z_{0,2} is not equal, the procedure to make Z_{0,1} and Z_{0,2} equal has to be rerun after the increase / decrease. The additional signal can also be one of the carrier sources themselves, if it is assumed that the amplifier output is not overdriven by the large common-mode carrier that will appear at its output.

If the amplifier is overdriven, it is possible to reduce the feedback impedances 1107,1108 to lower the carrier amplitude at the output of the amplifier, to make proper measurement of the mismatches in the impedances possible.

If it can be assumed that the nominal equivalent impedances Z_{0,1}, Z_{0,2}, Z_{0,3} match, the calibration procedure can be simplified. Z_{0,4} is not tuneable as it is the sensor which is modulated by the physical quantity. Z_{0,1}, Z_{0,2}, Z_{0,3} can be tuned in the same direction, as they are assumed to match.

The measured output signal is fed to the algorithm, which drives the feedback element. The feedback loop minimizes the residue output signal, for example the algorithm can detect a minimum residue value and stop the calibration procedure.

As mentioned above, the circuit of Figure 12 enables other ways of calibration. By means of the switch matrix 1200, any of the impedances can be connected to one or other side of the virtual ground node, or can be left floating. At the virtual ground node formed by the amplifier and its feedback elements the input currents are summed.

The residue signal is measured at the output of the mixer 1110, and fed to the algorithm which feeds the programmable equivalent nominal impedances accordingly. For example, the calibration procedure can in more detail be implemented as follows, for the case wherein the gain stages which mimic the equivalent impedances do not match:
Z_{0,4} is not tunable as it is the sensor's impedance modulated by the physical quantity.
   - At first Z_{0,1}/Z_{0,2} are not used.
   - Z_{0,3} is connected to the negative input of amplifier 1109.
   - Z_{0,4} is connected to the negative input of amplifier 1109.
   - As the carrier signals of Z_{0,3} and Z_{0,4} have anti-phase, the residue at the amplifier output is zero. If not, Z_{0,3} can be changed until the residue carrier is reduced to the required level. At this point Z_{0,3}=Z_{0,4}+Z_{x,4}.
   - Next, Z_{0,4} is disconnected and Z_{0,1} is connected to the negative input of amplifier 1109. Z_{0,1} can now be tuned to Z_{0,3}.
   - Next, Z_{0,3} is disconnected, and Z_{0,2} is connected to the negative input of amplifier 1109. Z_{0,2} can now be tuned to Z_{0,1}.
   - At this point Z_{0,1}=Z_{0,2}=Z_{0,3}= Z_{0,4}+Z_{x,4}. As can be seen, Z_{0,1},Z_{0,2},Z_{0,3} still differ Z_{0,x} from Z_{0,4}, as impedance 1106 is the sensor which is subject to the physical quantity.
   - Next Z_{0,1} and Z_{0,2} are connected to the negative input of amplifier 1109, and Z_{0,3} and Z_{0,4} are connected to the positive input of amplifier 1109. Z_{0,1}, Z_{0,2}, and Z_{0,3} can now be tuned to Z_{0,4} simultaneously by tuning them in LSB steps, to minimize the residue signal further. To make the further tuning more accurate, the signal component in this case represented by Z_{x,4}, be filtered out in the measurement system formed by the tuning circuit 1111,1112,1113.
   - The algorithm can be used to detect that the residue is minimized to the lowest value, for the given system accuracy, and the algorithm can then stop the calibration procedure.

If there is significant mismatch between the amplification feedback elements 1107,1108, these can be calibrated for instance by connecting one of the impedances 1103,1104,1105,1106 to the virtual ground node; first to the negative amplifier input; second to the positive amplifier input, and monitor the two output signals of the amplifier 1109 or the output signals from the mixer 1110. If the two output signals have different amplitude, there is mismatch between the feedback impedances, and they can be adapted according to the amplitude mismatch. This calibration is best performed, before the calibration of the impedances 1103,1104,1105,1106 in the input bridge.

If required, gain calibration can be achieved by connecting two of the input bridge impedances such as 1103 and 1105 in parallel in between the source 1101 and the positive input terminal of the amplifier, and at the same time, by connecting the other two impedances such as 1104,1106 in parallel between the other source 1102 and the negative input terminal of the amplifier. The absolute amplitude can be used to calibrate the gain of the system. Gain calibration might not be needed if the sensor capacitance is well defined.

There are clearly other ways of implementing the calibration. The order of calibration can be changed without changing the underlying concepts. Instead of switching the impedances Z_{0,1}, Z_{0,2}, Z_{0,3}, Z_{0,4}+Z_{x,4} to different inputs of the amplifier, the sign of the carriers can be inverted, or rearranged by replacing the switch matrix at the virtual ground side by a switch matrix at the source side.

Having two switch matrices would even lead to a more flexible system, and to more calibration possibilities.

Again, in the system of Figures 11 and 12, all of the impedances can be replaced by sensors with positive of negative sensitivity if appropriate.

The calibration can be automatically at power-on or one-time during testing in a production environment. In the latter case the algorithm does not to be implemented in logic on the IC. Calibration could for some sensors such as microphones even run continuously to compensate for example for parameter drift caused by temperature changes. An almost continuous change of the capacitor values would be preferred to not lead to audible signals. For example a linear capacitor bank could be used.

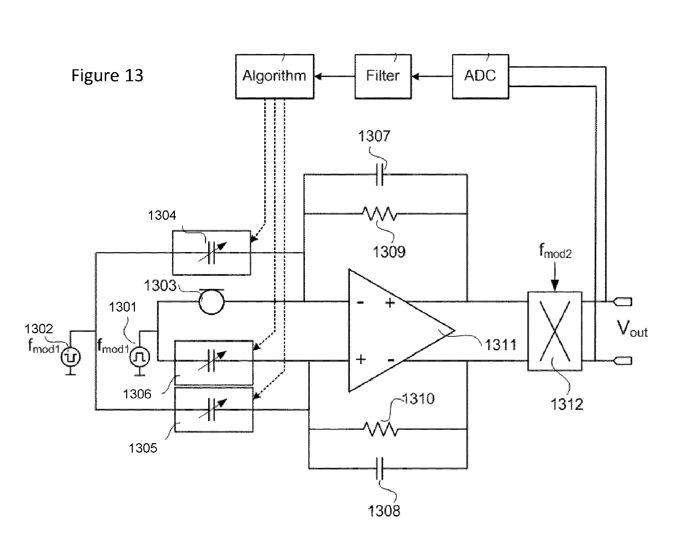

Figure 13 shows the circuit of Figure 11 applied to the circuit of Figure 6 in which the impedances 604,605,606 are implemented as capacitor banks 1304,1305,1306. The feedback elements 607,608,609,610 and the amplifier 611 are shown as 1307,1308,1309,1310 and 1311.

If the capacitor banks 1304, 1305, 1306 have sufficient matching, the capacitors banks can be tuned simultaneously to the same value, by looking at the output signal of the mixer 1312. Once the capacitor bank value equals the nominal capacitor value of the microphone, the calibration procedure can be stopped.

If the capacitor banks 1304, 1305, 1306 do not match, one of the algorithms described above can be used to set the capacitor banks, using the additional switch matrices if appropriate.

To increase the accuracy of the calibration procedure, the signal component at the output of the mixer, which is caused by a physical quantity change at the sensor, should be filtered out.

More than one microphone can be used with the circuit of Figure 13. Small parallel tuning elements can be applied to the microphones if the scatter in sensor parameters is high.

An AC bias has been shown in the examples above, but a combined AC and DC bias may be used. A charge pump circuit can be used for the bias signal generation, or other signal generating circuits can be used. The circuits shown can be integrated with an ADC to generate a digital sensor output - which may be the same or a different ADC to that used as part of the calibration system.

The adjustment of the impedances for matching the sensor impedance can control both real and imaginary impedance components.

The circuits have been described above as having two signal sources to generate the out of phase signals. Of course, there can be a single circuit for this purpose which generates both signals - this single circuit can still be considered to comprise two signal sources. The description and claims should be understood accordingly.

Various modifications will be apparent to those skilled in the art.

## Claims

1. A sensor circuit comprising:
a first AC signal source (401;501) for generating a first bias signal;
a second AC signal source (402;502) for generating a second bias signal with opposite phase to the first bias signal;
an amplifier (406;509) having first and second inputs;
a sensor (403;503) having an impedance which is sensitive to a physical property to be sensed, coupled between one of the first and second signal sources and the first input to the amplifier;
an impedance element (404;504) coupled between the other of the first and second signal sources and the first input to the amplifier, wherein the impedance element is substantially matched to a sensor impedance value.

2. A circuit as claimed in claim 1, wherein the second input to the amplifier is connected to ground, such that the first input comprises a virtual ground.

3. A circuit as claimed in claim 1 or 2, wherein the amplifier (406;509) comprises an opamp.

4. A circuit as claimed in any preceding claim, wherein the first input comprises the inverting input of the amplifier (406;509) and the circuit comprises a feedback impedance (405;507) from the output to the inverting input of the amplifier.

5. A circuit as claimed in any preceding claim, wherein the amplifier comprises a differential amplifier (509) with an inverting and a non-inverting input and a pair of differential outputs, wherein a second impedance element (506) is coupled between the one of the first and second signal sources and the second input to the amplifier and a third impedance element (505) is coupled between the other of the first and second signal sources and the second input to the amplifier.

6. A circuit as claimed in claim 5, wherein the circuit comprises a first feedback impedance (507) from one of the differential outputs to the inverting input of the amplifier and a second feedback impedance (508) from the other of the differential outputs to the non-inverting input of the amplifier.

7. A circuit as claimed in any preceding claim, wherein the or each feedback impedance comprises a capacitor.

8. A circuit as claimed in any preceding claim, wherein the or each feedback impedance comprises a capacitor in parallel with a resistor.

9. A circuit as claimed in any preceding claim, wherein the impedance element or one or more of the impedance elements if there are more than one, is or are adjustable, and wherein the circuit further comprises a calibration system (908,909,910) for impedance element adjustment to provide the matching.

10. A circuit as claimed in claim 9, further comprising a switching arrangement (1200) between the sensor and impedance element or elements and the amplifier.

11. A circuit as claimed in any preceding claim, wherein the impedance element or one or more of the impedance elements if there are more than one comprise a further sensor of the same type as the sensor.

12. A MEMS microphone circuit comprising:
a MEMS microphone; and
a sensor circuit as claimed in any preceding claim, wherein the MEMS microphone comprises the sensor of the sensor circuit..

13. A method of calibrating a sensor circuit which comprises a first AC signal source for generating a first bias signal, a second AC signal source for generating a second bias signal with opposite phase to the first bias signal, an amplifier having first and second inputs, a sensor (403;503) having an impedance which is sensitive to a physical property to be sensed, coupled between one of the first and second signal sources and the first input to the amplifier, and an adjustable impedance element (404;504) coupled between the other of the first and second signal sources and the first input to the amplifier,
wherein the method comprises substantially matching the impedance of the adjustable impedance element to a sensor impedance value.

14. A method as claimed in claim 13, comprising filtering the amplifier output to derive a signal component corresponding to the frequency of the first and second bias signals, and deriving control of the adjustable impedance element to minimise the signal component.

15. A method as claimed in claim 13 or 14, wherein the amplifier comprises a differential amplifier with an inverting and a non-inverting input and a pair of differential outputs, wherein a second impedance element is coupled between the one of the first and second signal sources and the second input to the amplifier and a third impedance element is coupled between the other of the first and second signal sources and the second input to the amplifier,
wherein none, one or two of the impedance elements comprise further sensors, and wherein the method comprises adjusting all of the impedance elements which are not sensors.
